# FASCICULE DE BREVET EUROPEEN

(11) **EP 0 440 569 B1**
(45) Date de publication et mention de la délivrance du brevet: **14.08.1996**
(21) Numéro de dépôt: 91420026.6
(22) Date de dépôt: 28.01.1991
(51) Int. Cl.: C04B 38/00

(54) **Procédé d'obtention de corps solides poreux à base de carbure réfractaire à l'aide de composés organiques et de métal ou métalloide**
Verfahren zur Herstellung von porösen Festkörpern auf der Basis von feuerfestem Carbid mit organischen Verbindungen und Metall oder Metalloid
Process for obtaining refractory carbide based porous solid bodies, using organic compounds and a metal or metalloid

(30) Priorité: 29.01.1990 FR 9001577
(43) Date de publication de la demande: 07.08.1991
(73) Titulaire: PECHINEY RECHERCHE (Groupement d'Intérêt Economique régi par l'Ordonnance du 23 Septembre 1967), 92400 Courbevoie (FR)
(72) Inventeur: Dubots, Dominique, F-74190 le Fayet (FR)
(74) Mandataire: Mougeot, Jean-Claude

(56) Documents cités:
- FR-A- 1 484 116
- US-A- 3 859 421
- US-A- 4 067 956
- US-A- 4 536 358
- US-A- 4 818 732

## Description

### DOMAINE TECHNIQUE

L'invention concerne un procédé d'obtention de corps solides poreux principalement constitués de carbures réfractaires d'éléments métalliques et/ou métalloïdiques, par exemple SiC, utilisant notamment comme matière de départ des composés organiques réticulables et cokéfiables, et des éléments métalliques et/ou métalloïdiques pulvérulents carburables.

Elle concerne également, à titre de produits nouveaux, des corps poreux principalement constitués de carbures réfractaires de métaux ou de métalloïdes.

### ETAT DE LA TECHNIQUE

Ses propriétés réfractaires et sa grande inertie chimique font par exemple que le carbure de silicium, comme la plupart des autres carbures métalliques ou métalloïdiques, peut être avantageusement utilisé sous forme de solides poreux ( pièces de forme, granulés, extrudés, ... ) dans de nombreuses applications, notamment comme support de catalyseur, ou même comme catalyseur dans les réactions chimiques à haute température, par exemple dans l'industrie chimique, celle du pétrole ou dans les pots d'échappement, mais aussi comme pièces filtrantes pour gaz ou liquides agressifs, métaux fondus... ou encore comme récupérateur-échangeur de chaleur.

Dans ces applications, les solides poreux peuvent avoir une structure monolithique, parfois de grande dimension, ou granulaire, et doivent présenter à la fois une bonne résistance mécanique ou à l'attrition et une excellente stabilité thermique pour conserver les propriétés spécifiques du carbure et de la structure au cours du temps et après de nombreux cycles thermiques.

Un certain nombre de documents décrivent des procédés de fabrication de corps poreux en carbure de silicium :
- Le brevet français FR 1484116 (US Atomic Energy Commission) décrit un procédé consistant à mélanger un liant à base d'alcool furfurylique partiellement polymérisé avec des constituants produisant de l'uréthane et de la poudre de Si ou d'autres métaux. Le dégagement de CO₂ résultant de la combinaison des constituants produisant l'uréthane provoque la création d'une mousse qui, après consolidation, est calcinée à haute température (2200°C) pour donner une mousse contenant du SiC. Mais l'abondant dégagement gazeux conduit à une macroporosité qui, ainsi qu'il sera expliqué plus loin, est préjudiciable à l'application principale objet de la présente demande : l'obtention de catalyseurs.
- le brevet US 4536358 (WELSH) utilise pour obtenir un produit poreux en carbure métallique ou métalloïdique de surface et de structure poreuse appropriées, un support en oxyde minéral (de l'alumine par exemple) présentant ces caractéristiques de surface et de structure poreuse. On dépose sur ce support minéral un produit organique polymérisable qui est pyrolysé et forme une couche de composé carboné. Sur cette couche on dépose enfin, par des techniques de dépôt en phase vapeur, le métal ou métalloïde dont on veut obtenir le carbure. On chauffe à haute température et on obtient ainsi une réplique en carbure de la surface de l'oxyde, oxyde que l'on peut éliminer par dissolution par exemple.
- le brevet US 3859421 (HUCKE) permet l'obtention d'une structure carbonée poreuse avec un volume et une répartition de pores contrôlés indépendamment. On mélange à cet effet un liant qui donnera le squelette carboné résiduel après calcination, un liquide porogène formant une phase liquide continue et dont l'élimination donnera le réseau de pores interconnecté et un dispersant assurant la continuité de la phase liquide porogène. Le mélange est moulé puis consolidé par exemple par polymérisation du liant; le liquide porogène est éliminé, ce qui donne naissance au réseau de pores et le liant restant est calciné. En ajoutant au mélange du silicium ou de la silice, il est possible après pyrolyse à très haute température d'obtenir du SiC.
- le brevet US 4067956 (FRANKLIN) décrit une structure de carbure poreuse dérivée d'une structure de polyuréthane, par infiltration à l'intérieur de cette structure d'une résine thermodurcissable et carbonisation de produit obtenu à haute température. Des produits contenant des carbures peuvent être obtenus par infiltration des pores par un métal carburable ou par revêtement des pores avec des revêtements de carbures ou de nitrures par dépôt chimique en phase vapeur.
- le brevet US 4818732 décrit un procédé de fabrication d'une céramique en carbure de silicium, à haute surface spécifique à microporosité ouverte consistant à calciner un gel de polyorganosilane, en atmosphère inerte. Le montant de silice et de carbone, la taille et la distribution des pores, peuvent être modifiés par des traitements ultérieurs permettant l'élimination sélective du carbone et/ou de la silice.

### OBJET DE L'INVENTION

Un objet de l'invention est d'obtenir des solides poreux de forme géométrique adaptée à la demande (pièces de forme, granulés, extrudés, etc...), composés essentiellement de carbures réfractaires d'éléments métalliques ou métalloïdiques ayant une surface spécifique élevée, tout en présentant :
. des propriétés mécaniques suffisantes permettant une bonne tenue à l'écrasement grâce à un squelette suffisamment massif en carbures desdits éléments métalliques et/ou métalloïdiques constitué de microcristaux frittés.
. une bonne résistance à l'érosion et à l'abrasion due notamment à un bon degré de frittage
. une bonne stabilité thermique de façon à éviter tout changement de structure qui pourrait entraîner une diminution de la surface spécifique.

Un autre objet est d'obtenir des pièces ayant une porosité désirée, adaptée à l'usage envisagé, celui de support de catalyseur.

La porosité d'un catalyseur est généralement classée en 3 types selon leur diamètre moyen. On distingue :
- les macropores (macroporosité) d'un diamètre supérieur à 100 µm**,** inefficaces du point de vue de la catalyse et qui ont l'inconvénient de prendre la place de la matière active;
- les mésopores (mésoporosité) d'un diamètre compris entre 1 µ et 100 µ qui assurent les transferts de matière gaz ou liquides au sein de la masse catalytique;
- les nanopores (nanoporosité) de diamètre compris en général entre 0,005 µ et 0,1 µ qui développent une surface élevée sur laquelle est déposé le catalyseur.

Les pièces objet de l'invention présentent une porosité essentiellement bimodale comprenant des mésopores et des nanopores et une faible proportion de macropores.

### DESCRIPTION DE L'INVENTION

L'invention est un procédé d'obtention de supports de catalyseurs et des catalyseurs auto-supportés de forme et de porosité bimodale adaptées à la demande constitués principalement de carbures réfractaires d'éléments métalliques et/ou métalloïdes, à surface spécifique élevée caractérisée en ce que :
. on mélange intimément au moins un composé exclusivement organique, polymère et/ou polymérisable, réticulable, cokéfiable avec un haut rendement en carbone et capable de donner un squelette carboné solide, avec une poudre non fusible, dans les conditions de traitement, de métal (ou métalloïde) et/ou d'un composé métallique (ou métalloïdique) réductible par le carbone, ledit métal (ou métalloïde) étant carburable, et avec d'éventuels solvants, plastifiants et/ou d'autres adjuvants organiques ou non organiques, de façon à obtenir un mélange pâteux,
. on met en forme ledit mélange,
. on élimine au moins en partie les éventuels solvants, plastifiants et/ou adjuvants
. on réticule le composé organique, après l'avoir éventuellement polymérisé
. on traite thermiquement dans un premier temps, entre 500 et 1000°C, en atmosphère non oxydante pour carboniser le composé organique et obtenir un squelette poreux constitué essentiellement d'un mélange de carbone et de particules dudit métal (métalloïde) et/ou dudit composé métallique (métalloïdique), et dans un deuxième temps pour opérer, après réduction éventuelle du composé métallique ou métalloïdique, une transformation en carbure à température modérée entre 1000 et 1400°C en atmosphère non oxydante, les profils thermiques étant tels que les réactions ont lieu en phase solide et/ou gazeuse.

Par composé exclusivement organique, on entend des polymères dont la chaîne principale est essentiellement formée d'un squelette carboné à l'exclusion notamment des chaînes dont le squelette au lieu d'être formé de groupes carbonés, est essentiellement formé d'autres atomes tels que le silicium (organosilane), le bore, le phosphore.

Selon l'invention, les composés organiques sont généralement utilisés à l'état liquide ou mieux pâteux pour pouvoir effectuer le mélange avec la poudre non fusible dans de bonnes conditions; ces états liquides ou pâteux peuvent être naturels à température ambiante, ou obtenus par fusion à une température inférieure à leur température de réticulation et/ou de carbonisation et de préférence à une température peu supérieure à la température ambiante, ou encore à l'aide d'un solvant et/ou plastifiant éliminable également à une température inférieure à celle de réticulation et/ou de carbonisation. Ils sont en général polymériques, thermoplastiques et réticulables par tous moyens connus en chimie macromoléculaire, par exemple par la chaleur, par décomposition thermique d'un initiateur (tel qu'un peroxyde), par réaction avec un durcisseur additionné ou non d'un catalyseur, par irradiation, par addition d'un monomère ..., de façon à obtenir, après mélange avec la poudre non fusible et durcissement, un produit possédant une forme géométrique déterminée.

Il est également possible d'utiliser comme composés organiques un ou plusieurs monomères organiques qui sont ensuite polymérisés et réticulés selon les méthodes de la chimie macromoléculaire, comme indiqué ci-dessus.

Il est important qu'après carbonisation, lesdits composés organiques donnent un squelette carboné solide, de préférence activable par les méthodes habituelles de préparation des charbons actifs connues de l'homme de l'art avec un taux de carbonisation (taux de résidu carboné) de 25% au moins. Les résines telles que les résines furfuryliques, phénoliques,... par exemple conviennent bien. De même conviennent des composés organiques complexes tels que les brais.

Dans ce qui suivra, et par convention, le terme "métal" englobera également des métalloïdes comme cela a été dit. Le terme non fusible signifie que la poudre n'est pas fusible au cours du procédé selon l'invention, et en particulier au cours des différents traitements thermiques effectués.

La poudre non fusible est par exemple un métal, de préférence le silicium qui peut être utilisé tel quel ou partiellement oxydé. Mais on peut utiliser également d'autres métaux et/ou des composés métalliques ou leurs mélanges entre eux ou avec le silicium, à condition que le métal ou le composé ne soit pas fusible dans les conditions d'obtention du carbure, que ledit composé soit réductible par le carbone et que ledit métal soit carburable en donnant des carbures réfractaires. Les métaux qui conviennent sont en général les éléments de transition des groupes 3b, 4b, 5b, 6b, 7b, 8 des séries ou périodes 4, 5, 6, de la classification périodique des éléments, les terres rares (lanthanides) et les actinides; mais on a plus particulièrement retenu Mo, W, Re et aussi V, Ta, Nb, Ti, Cr, Ni, Co... Ledit composé est habituellement un oxyde. La dimension de ses particules est habituellement inférieure à 100 µm et sa surface spécifique BET d'au moins 0,5 m²/g.
La présence d'espèces oxydées n'est donc pas rédhibitoire. Il est cependant préférable que la proportion d'oxyde introduite ne consomme pas, lors de sa réduction, une quantité de carbone telle que la solidité du squelette carboné soit mise en cause.

Il est important d'avoir une poudre aussi fine que possible, qui améliore le rendement final du traitement de carburation et permet d'obtenir la transformation complète de la poudre de départ.

On peut également ajouter à ce mélange d'autres adjuvants, adaptés par exemple à l'usage envisagé pour le solide poreux. Certains d'entre eux servent à modifier les caractéristiques dudit solide, par exemple la surface spécifique , la porosité, l'activité de la surface, les caractéristiques mécaniques....

On peut ainsi citer:
- des agents durcisseurs tels que initiateurs et catalyseurs de réticulation et de copolymérisation
- des agents porogènes destinés à mieux contrôler la formation de mésoporosité, par exemple mélamine, fibres organiques, silices nanométriques, sels minéraux ou produits organiques inertes vis-à-vis des autres constituants du mélange et se décomposant sous forme d'espèces gazeuses au cours du procédé. Les agents porogènes développant de la macroporosité et les agents moussants tels les uréthanes et polyuréthanes sont à exclure.
- des agents générateurs de surface spécifique (nanoporosité) tels que noir de carbone, fines de charbon actif, celluloses monocristallines...
- des agents activateurs ou des catalyseurs d'activation des surfaces poreuses obtenues, tels que des sels alcalins, phosphates, sels d'aluminium...
- des agents dopants modifiant les caractéristiques des surfaces des pores générées, tels que des composés de métaux multivalents, que l'on retrouve après le traitement thermique par exemple sous forme de carbures, oxycarbures intermédiaires.
- etc...

La quantité de résine, et des éventuels adjuvants organiques, utilisée est en général telle qu'après carbonisation, la quantité de carbone générée est au moins en léger excès par rapport à la quantité stoechiométrique des réactions ayant lieu lors des différents traitements thermiques, en particulier des réactions de réduction et de carburation.

Cet excès de carbone pourra être éliminé, après la carburation finale, par une oxydation ménagée à basse température sous air, ou plus généralement en présence d'oxygène, à une température habituellement comprise entre 500 et 900° C, de préférence autour de 600° C. Il ne doit pas être trop important, sinon la pièce risque d'être détériorée lors de cette oxydation.

La mise en forme est effectuée par tous moyens connus, tels que la coulée, l'extrusion, le moulage sous pression, le pressage.

On effectue le durcissement, comme cela a été dit précédemment, éventuellement accompagné ou précédé par l'élimination du solvant ou plus généralement des composés organiques de bas poids moléculaire. Ces opérations de polymérisation, réticulation, élimination du solvant, doivent être effectuées à une température inférieure à la température de carbonisation.

On effectue la carbonisation du produit organique de départ, c'est-à-dire une pyrolyse ménagée sous atmosphère non oxydante, selon un profil de température adapté aux constituants organiques utilisés, à la masse et à la densité des pièces traitées; comme cela a été dit, la température de carbonisation se situe entre 500 et 1000° C.

Après carbonisation complète, on obtient un squelette poreux de carbone dans la masse duquel sont incrustées et dispersées les particules des poudres de départ. Pour l'application visée qui est la fabrication de supports de catalyseur ou de catalyseurs, il est préférable de modifier la distribution porosimétrique du squelette carboné en procédant à une activation de la phase carbonée du squelette par tous les moyens habituels connus et utilisés pour l'obtention de charbons actifs; cela consiste essentiellement en une oxydation ménagée du carbone du squelette en injectant un gaz faiblement oxydant par exemple CO2 et/ou H2O, entre 500 et 1000° C, ce qui augmentera considérablement les surfaces spécifiques du solide par le développement d'une nanoporosité.

On procède alors à la carburation, en atmosphère non oxydante statique ou sous balayage, par exemple argon, hydrogène, hydrocarbure, azote, ammoniac..., à une température modérée, c'est-à-dire habituellement comprise entre 1000 et 1400° C et de préférence entre 1150 et 1250° C pour éviter des phénomènes de grossissement de grains qui provoquent des disparitions de surface Il est également important de maintenir la température à une valeur inférieure à la température de fusion du métal ou du composé métallique, de façon à éviter le risque d'un bouchage de la porosité. Lors de cette opération, on effectue la réduction des oxydes, ou la termine si elle a commencé à l'étape précédente et on carbure suffisammment longtemps pour que le métal noyé dans le squelette carboné soit transformé. La transformation est de préférenc totale, mais peut être partielle selon les métaux employés; l'important est que le métal soit carburé au moins à 80%. On obtient alors un produit qui est un solide poreux (pièce de forme, granulé, extrudé....) constitué principalement d'un squelette de microcristaux frittés en carbure du métal ou des métaux contenus dans le mélange de départ, ces derniers pouvant former des composés définis ou des solutions solides variées. Il peut contenir du carbone résiduel qui, comme cela a été dit, est éliminé à l'oxydation.

Quand le traitement thermique de carburation n'a pas été total, on peut retrouver, dans le produit final, des particules résiduelles de métaux ou métalloïdes n'ayant pas réagi, enrobés dans les phases ayant réagi. Ces particules résiduelles ne sont en général pas gênantes car elles n'affleurent pas à la surface du squelette de carbure.

On peut trouver également en surface à l'état de couche quasiment moléculaire des phases oxydées métastables composées par exemple d'oxycarbures, d'oxycarbonitrure et/ou de sous oxydes... apparaissant souvent comme amorphes après examen par diffraction aux rayons X, et aussi des atomes d'oxygène adsorbés ou piégés dans le réseau cristallin.

Le squelette poreux de produits carburés présente d'excellentes caractéristiques mécaniques, notamment résistance à l'écrasement et une surface spécifique BET élevée, toujours supérieure à 15 m2/g voire 30 m2/g, après élimination du carbone résiduel.

Dans le cas où le produit est destiné à être un support de catalyseur à base de SiC, les surfaces spécifiques les plus élevées et les plus actives sont également obtenues en jouant sur les conditions opératoires, par exemple en faisant une carburation à température modérée (1150-1200°C) de façon à éviter une recristallisation trop importante.

A l'analyse, on détecte alors à la surface du SiC la présence d'une espèce amorphe qui pourrait être un oxycarbure s'écrivant Si Ox Cy. Des espèces analogues peu stables, du type oxycarbures sont également observées dans le cas de carbures métalliques de l'invention, en particulier de carbures de métaux multivalents. Ces espèces métastables généralement amorphes, favoriseraient l'activation de la surface poreuse du support de carbure et le dépôt ultérieur de catalyseur ; elles peuvent également modifier l'activité dudit catalyseur.

Dans ce cas, on note également la présence favorable d'une répartition bimodale de la porosité:
- une mésoporosité avec une famille de pores généralement compris entre 1 et 100 µm environ qui permet d'assurer l'accès, la circulation et transferts de masse des espèces gazeuses ou liquides.
- une nanoporosité avec une famille de pores généralement inférieure à 0,1 µm environ, essentiellement destinée aux phénomène de catalyse et augmentant la surface spécifique.

Cette porosité bimodale permet d'avoir une surface active participant aux phénomènes catalytiques, en favorisant une bonne dispersion des catalyseurs et une bonne réactivité de fixation desdits catalyseurs grâce aux espèces amorphes présentes en surface, et en améliorant l'activité catalytique (rendement, sélectivité) desdits catalyseurs déposés.

Dans le cas où le carbure a des propriétés catalytiques par lui-même, les corps poreux obtenus peuvent être utilisés comme catalyseur de réactions chimiques ou pétrochimiques à haute température, de conversion des gaz d'échappement de véhicules automobiles etc... soit directement, soit après des traitements particuliers d'activation propres à chacun d'eux et/ou à la réaction catalytique envisagée. Ces carbures peuvent également être utilisés avec tous supports de catalyseurs.

L'activité catalytique du squelette peut également être modifiée par l'insertion dans son réseau cristallin d'éléments dopants susceptibles de modifier le niveau énergétique de sa surface pour favoriser l'apparition et la stabilisation des espéces amorphes ou métastables, et de créer des sites actifs par l'affleurement desdits dopants.

L'amélioration de l'activité catalytique peut aussi être obtenue par l'addition de composés alcalins ou alcalinoterreux.

Un support de catalyseur peut être caractérisé non seulement par la valeur de sa surface spécifique, mais aussi par la qualité de celle-ci, en particulier son "acidité" au sens de Lewis et/ou de Brönsted, c'est-à-dire son aptitude à accepter ou à céder des électrons. Dans le cas des carbures objets de l'invention, il est apparu que le support pouvait être activé par des traitements acides ou basiques et que ce type de traitement d'activation pouvait conduire à modifier l'acidité de la surface et/ou la valeur de la surface spécifique. En particulier, des états de surfaces "acides" sont recherchés pour les supports dans de nombreuses applications. Les traitements acides ou basiques peuvent être effectués en phase liquide ou gazeuse, pure ou diluée (solution...). Selon le type d'activation recherché on peut utiliser par exemple la soude, l'ammoniac, les acides chlorhydriques, nitriques ... et notamment l'acide fluorhydrique anhydre (liquide ou gazeux), pur ou dilué (par N₂, H₂O ...), dans le cas du carbure de silicium.

### EXEMPLES

### Exemple 1

Cet essai illustre l'obtention d'un support de catalyseur activé à base de carbure de silicium.
Le mélange de départ contient :
500 g de résine furfurylique (LP340 de Quaker Oats Chemicals)
300 g de durcisseur organique (C52, solution organique d'acide paratoluène sulfonique dans l'éthylglycol et le butylglycol) adapté à la résine
40 g de Si en poudre de surface spécifique BET 8 m2/g et de granulométrie passant 60 µm.

Il a été mis sous forme d'un pain cylindrique de diamètre 10 cm et de hauteur 5 cm par moulage.
Le durcissement a été effectué dans une étuve à 100° C pendant 2 h.
Le cylindre solide obtenu a été concassé et tamisé de façon à obtenir une coupe granulométrique située entre 4 et 8 mm.
Les granulés ainsi obtenus ont été carbonisés 900° C sous balayage d'azote pendant 2 h, pour donner un squelette de carbone incrusté des particules de Si, qui a été activé par traitement à 900° C pendant 4 h. sous atmosphère de CO2.

Le traitement thermique de carburation a été effectué à 1200° C pendant 2 h sous balayage d'Ar, le carbone résiduel ayant ensuite été éliminé par chauffage à 600° C. sous air.

On a ainsi obtenu un squelette principalement composé de SiC de surface spécifique BET 168 m²/g avant élimination du carbone résiduel.
Après ladite élimination, la surface spécifique BET obtenue est de 30 m²/g, avec un spectre de pores présentant une distribution bimodale centrée sur des diamètres de pores de 11 et 0,01 µm, et on observe une excellente résistance à l'écrasement.

### Exemple 2

Avec le même mélange, on a mis en oeuvre le même procédé, sans toutefois concasser le cylindre; par ailleurs, après carbonisation le traitement de carburation a été effectué à 1400° C pendant 2 h.

Le squelette de carbure obtenu a une surface spécifique BET de 2 m²/g, seulement avant comme après élimination du carbone résiduel, avec une majorité de macropores distribués entre 50 et 1 µm; le cylindre a aussi une excellente résistance à l'écrasement.
Une telle pièce est inapte à la catalyse.

### Exemple 3

Cet exemple illustre les effets obtenus par l'ajout d'additifs au mélange de départ.
Le mélange est constitué de :
500 g de résine furfurylique LP 340
40 g de durcisseur organique C52
300 g de la même poudre de Si
100 g de noir de carbone (FW2V - Degussa)
330 g d'une solution de 80 g de stéarate d'Al dans 250 g d'éthanol
On a ajouté des adjuvants dont le rôle peut être décrit de la façon suivante :
- le stéarate d'Al en solution dans l'éthanol apporte de l'aluminium qui, sous cette forme, se répartit de façon très homogène dans le mélange; l'aluminium est destiné à inhiber la croissance cristalline et ainsi augmenter la surface spécifique du côté de la fine porosité, il modifie également l'état de surface du support en SiC pour augmenter l'activité des catalyseurs qui y seront déposés.
- le noir de carbone sert à modifier les propriétés rhéologiques du mélange en augmentant sa viscosité, à l'activation du support carboné (il s'élimine au cours de cette opération), et ainsi à augmenter la porosité du support en SiC du côté des petits pores.

Le mélange a été mis en forme de bâtonnets par extrusion.
La prise a été effectuée par chauffage à 110° C pendant 16 h en étuve.
La carbonisation et l'activation ont eu lieu dans les mêmes conditions que dans les exemples 1 et 2. Le traitement thermique de carburation a été effectué à 1200° C pendant 2 h sous Ar.
Le squelette de Si C a une surface spécifique BET de 122 m²/g.
Après élimination du carbone résiduel par chauffage à 600° C pendant 3 h. sous air, la surface spécifique BET atteint 48 m²/g.

### Exemple 4

Cet exemple illustre les effets obtenus par d'autres adjuvants.
Le mélange de départ est le suivant :
1000 g de résine furfurylique LP 340
70 g de durcisseur organique C52
700 g de la même poudre de Si
65 g de phosphate d'Al
100 g de silice pyrogénés (FK320 Degussa), c'est-à-dire très divisée et ayant une grande surface spécifique BET (320 m2/g)
600 g d'eau
Ici les adjuvants ont eu pour rôle :
- le phosphate d'aluminium d'apporter l'aluminium combiné à un anion qui favorise l'activation du support carboné ;
- la silice pyrogénée, de faciliter la réaction de carburation;
- l'eau, de répartir le phosphate d'Al, de diminuer la viscosité et d'être un agent porogène favorisant la mésoporosité.

Après mise en forme, comme dans l'exemple 3, la prise a été effectuée à 120° C pendant 16 h.
La carbonisation et l'activation ont été faites dans les mêmes conditions que précédemment. Le traitement thermique de carburation a été effectué à 1200° C pendant 2 h sous Ar. La surface spécifique BET obtenue est de 190 m²/g. Après élimination du carbone résiduel (600° C pendant 3 h sous air), la surface spécifique obtenue est de 31 m²/g.

### Exemple 5

Dans cet exemple on a augmenté la viscosité du mélange de départ, par l'addition de noir de carbone, en vue d'opérer une mise en forme par extrusion.
Le mélange de départ contient :
500 g de résine furfurylique (LP 340)
40 g de durcisseur organique C52
300 g de la même poudre de Si
100 g de noir de carbone (de surface spécifique BET de 250 m²/g. )
La viscosité du mélange est telle qu'on l'extrude à travers une filière pour obtenir des bâtonnets d'environ 3 à 4 mm de diamètre et de 4 à 6 mm de longueur.
Comme précédemment on effectue un durcissement, une carbonisation, une activation, une carburation.
Après carburation la surface spécifique BET obtenue est de 122 m²/g et après traitement d'oxydation (600°C à l'air pendant 3 h) pour éliminer le carbone résiduel, la surface spécifique BET des bâtonnets de carbure de silicium est de 48 m²/g.

### Exemple 6

Dans cet exemple on a utilisé un autre composé exclusivement organique.
Le mélange de départ contient :
500 g de résine phénolique liquide (de viscosité 4 Pa.s (4000 centipoise)
40 g de durcisseur à base d'hexaméthylènetétramine
250 g de la même poudre de Si
Comme dans l'exemple 5, ce mélange a été extrudé sous forme de bâtonnets, puis durci, carbonisé, activé et carburé.
Le carbure obtenu, avant élimination du carbone résiduel, présente une surface spécifique BET de 190 m²/g.

### Exemple 7

Cet exemple illustre l'obtention d'un carbure mixte de silicium et molybdène.
Le mélange de départ contient :
140 g de résine furfurylique (LP 340)
5 g de durcisseur organique C52
100 g de la même poudre de Si
50 g de poudre de molybdène de granulométrie passant 150 µm
Ce mélange est mis en forme et traité comme dans l'exemple 1 : durcissement, concassage, carbonisation, activation, carburation.
Le carbure mixte de SiC, Mo2 C poreux obtenu présente avant élimination du carbone résiduel une surface spécifique BET de 83 m²/g et après élimination dudit carbone (600°C à l'air pendant 3 h) une surface spécifique BET de 21 m²/g.

### Exemple 8

Cet exemple illustre l'obtention d'un carbure mixte à surface spécifique élevée en partant d'un composé métallique réductible par le carbone.
Le mélange de départ contient :
300 g de résine furfurylique (LP 340)
5 g de durcisseur organique C52
140 g de la même poudre de Si
100 g de poudre d'oxyde de molybdène (MoO3) passant 100 µm.
Il a été mis en forme et traité comme dans l'exemple 1 : durcissement, concassage, carbonisation, activation, réduction, carburation.
On a obtenu un carbure mixte de SiC et de Mo₂C présentant, avant élimination du carbone résiduel, une surface spécifique BET de 51 m²/g.

### Exemple 9

Le mélange de départ est constitué de:
690 g de résine furfurylique (LP 340)
300 g de poudre de Si (de surface spécifique 11m²/g et passant 60 µm )
10 g de catalyseur de réticulation (C52).
On durcit le mélange à 150°C, on concasse la masse obtenue en grains d'environ 4 à 8 mm, on les carbonise à 900°C sous azote; on active le squelette carboné par traitement à 900°C sous CO₂; puis on effectue la carburation à 1200°C pendant 4 h également sous Ar.

Le carbure obtenu possède une surface spécifique BET de 96 m²/g et une teneur en oxygène de 7%. Après élimination du carbone résiduel (600°C, 3 h, sous air), on traite à l'aide d'une solution aqueuse d'acide fluorhydrique à 40%; on rince puis sèche.
La surface spécifique BET obtenue est de 190 m²/g et la teneur en oxygène de 3 %; de plus, la mesure de l'acidité de la surface montre une réaction acide.

### Exemple 10

Cet exemple illustre l'influence de la température de transformation sur le taux de conversion en SiC du mélange carbonisé.

Le mélange de départ contient:
- 980 g de résine furfurylique LP 340 de Quaker Oats Chemicals
- 820 g de silicium broyé, de surface BET = 8 m²/g
- 200 g de carbon black Printex de Degussa.

Ce mélange a été extrudé, polymérisé à l'étuve puis carbonisé à 800°C sous azote.
A l'issue de la carbonisation, le lot a été réparti en 6 échantillons qui ont été traités pour conversion en SiC chacun pendant 2 heures sous argon, mais à des températures différentes : 900°C, 1100°C, 1200°C, 1300°C, 1500°C, 1700°C.

Chacun de ces 6 lots a subi ensuite une oxydation à 600°C pendant 8 heures dans l'air pour éliminer le carbone excédentaire.
On a mesuré les surfaces BET de chacun de ces 6 lots et calculé pour chacun la quantité de SiC formé par comparaison des taux d'oxydation sur produit carbonisé (avant conversion en SiC) et sur produit traité (après conversion).

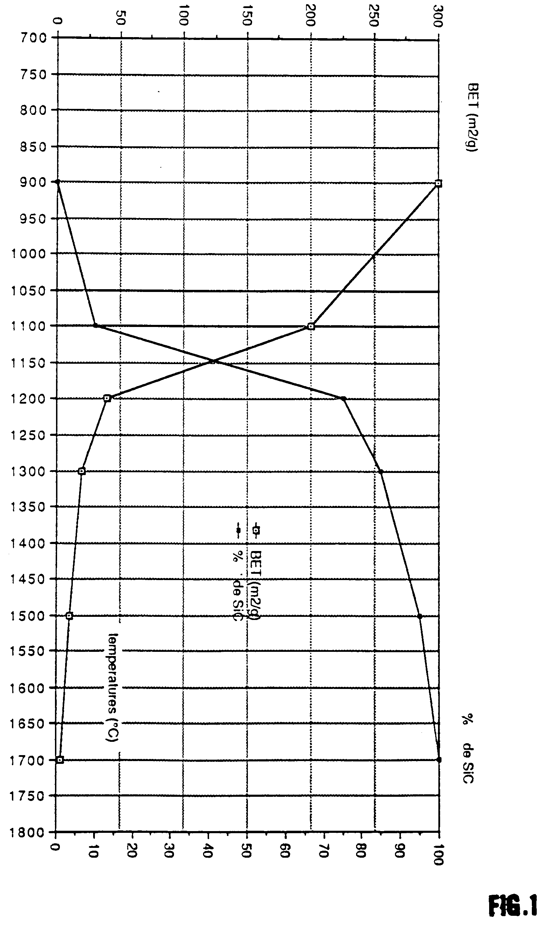

La figure 1 représente les résultats obtenus. On constate que lorsque la température de traitement augmente, le taux de transformation en SiC agmente alors que la surface spécifique BET diminue.
Il apparaît nettement que la plage de températures dans lesquelles ces grandeurs varient le plus est étroite : de 1000°C à 1400°C. C'est donc à l'intérieur de cette plage que l'on pourra le plus facilement ajuster le compromis entre taux de conversion en SiC et surface spécifique.
En fait, l'intervalle de température qui semble résaliser le meilleur compromis pour les supports SiC se situe entre 1150°C et 1350°C.

### Exemple 11

Cet exemple illustre la fabrication d'un corps poreux en carbure de tungstène à partir de tungstène métal.
Le mélange suivant est réalisé dans un malaxeur à bras en Z :
84% en poids de poudre de tungstène < 200 µm
13% en poids de résine furfurylique LP340 de chez QO Chemicals
3% en poids de carbon black Printex 85 de chez Degussa.
Cette pâte homogène est extrudée à l'aide d'une extrudeuse à vis au travers d'une filière pour obtenir des bâtonnets.
Les extrudés sont portés à 120°C dans une étuve ventilée de façon à assurer la prise par thermodurcissement de la résine contenue.
Ces bâtonnets extrudés solides sont carbonisés en continu entre 700 et 900°C dans four rotatif sous balayage d'azote. Leur surface spécifique BET est alors de 40 m2/g. Les bâtonnets carbonisés sont ensuite transformés en continu dans un four rotatif à 1220°C sous balayage d'argon.
Les produits obtenus ont une surface spécifique de 28 m2/g et l'identification des phases par diffractométrie RX indique la présence du carbure de tungstène WC et de tungstène métallique non transformé.

### Exemple 12

Cet exemple illustre la fabrication d'un corps poreux en carbure de tungstène à partir de l'oxyde de tungstène WO3.
Préalablement l'oxyde de tungstène est placé dans un broyeur à boulets métalliques avec 7% en poids de carbon black Printex 85 de chez Degussa. Cette opération permet une réduction granulométrique de l'oxyde favorisée par l'action antimottante du carbon black qui par ailleurs se trouve intimement mélangé à l'oxyde.
Le mélange résultant du broyage possède une surface spécifique de l'ordre de 10 m2/g. Ce mélange est homogénéisé avec 25% en poids de résine furfurylique LP 340 de chez QO Chemicals dans un malaxeur à bras en Z. Cette pâte homogène est extrudée à l'aide d'une extrudeuse à vis au travers d'une filière pour obtenir des bâtonnets. Les extrudés sont portés à 120°C dans une étuve ventilée de façon à assurer la prise par thermodurcissement de la résine contenue.
Ces bâtonnets extrudés solides sont carbonisés en continu entre 700 et 900°C dans un four rotatif sous balayage d'azote. Leur surface spécifique BET est alors de 103 m2/g. Les bâtonnets carbonisés sont ensuite transformés en continu dans un four rotatif à 1220°C sous balayage d'argon.
Les produits obtenus ont une surface spécifique de 42 m2/g et l'identification des phases par diffractométrie RX indique la présence :
en phase majoritaire du carbure de tungstène WC
en phase secondaire du carbure de tungstène W2C
en phase très minoritaire du tungstène métallique.

### Exemple 13

Cet exemple illustre la fabrication d'un corps poreux en carbure de vanadium à partir de l'oxyde V₂O_{5.}
Préalablement, l'oxyde de vanadium est placé dans un broyeur à boulets métalliques avec 17% en poids de carbon black Printex 85 de chez Degussa. Cette opération permet une réduction granulométrique de l'oxyde favorisée par l'action antimottante du carbon black qui par ailleurs se trouve intimement mélangé à l'oxyde.
Le mélange résultant du broyage possède une surface spécifique de l'ordre de 10 m2/g.
Ce mélange est homogénéisé avec 40% en poids de résine furfurylique LP340 de chez QO Chemicals dans un malaxeur à bras en Z. Cette pâte homogène est extrudée à l'aide d'une extrudeuse à vis au travers d'une filière pour obtenir des bâtonnets. Les extrudés sont portés à 120°C dans une étuve ventilée de façon à assurer la prise par thermodurcissement de la résine contenue. Ces bâtonnets extrudés solides sont carbonisés en continu entre 700 et 900°C dans four rotatif sous balayage d'azote. Leur surface spécifique BET est alors de 162 m2/g. Les bâtonnets carbonisés sont ensuite transformés en continu dans un four rotatif à 1220°C sous balayage d'argon.
Les produits obtenus ont une surface spécifique de 71 m2/g et l'identification des phases par diffractométrie RX indique la présence :
en phase majoritaire des carbures de vanadium V8C7 et V4C3.

### Exemple 14

Cet exemple illustre la fabrication d'un corps poreux en carbure de molybdène à partir de l'oxyde MoO3.
Préalablement, l'oxyde de molybdène est placé dans un broyeur à boulets métalliques avec 14% en poids de carbon black Printex 85 de chez Degussa. Cette opération permet une réduction granulométrique de l'oxyde favorisée par l'action antimottante du carbon black qui par ailleurs se trouve intimement mélangé à l'oxyde. Le mélange résultant du broyage possède une surface spécifique de l'ordre de 10 m2/g.
Ce mélange est hoomogénéisé avec 33% en poids de résine furfurylique LP340 de chez QO Chemicals dans un malaxeur à bras en Z. Cette pâte homogène est extrudée à l'aide d'une extrudeuse à vis au travers d'une filière pour obtenir des bâtonnets. Les extrudés sont portés à 120°C dans une étuve ventilée de façon à assurer la prise par thermodurcissement de la résine contenue. Ces bâtonnets extrudés solides sont carbonisés en continu entre 700 et 900°C dans four rotatif sous balayage d'azote. Leur surface spécifique BET est alors de 165 m2/g. Les bâtonnets carbonisés sont ensuite transformés en continu dans un four rotatif à 1220°C sous balayage d'argon.
Les produits obtenus ont une surface spécifique de 152 m2/g et l'identification des phases par diffractométrie RX indique la présence :
en phase majoritaire du carbure de molybdène Mo2C.

## Revendications

1. Procédé d'obtention de corps solides poreux de forme et de porosité adaptées à la demande constitués principalement de carbures réfractaires d'éléments métalliques et/ou métalloïdes, à surface spécifique élevée, caractérisé en ce que :
. on mélange intimément au moins un composé exclusivement organique, polymérique et/ou copolymérisable, cokéfiable et capable de donner un squelette solide carboné, avec une poudre non fusible, dans les conditions du traitement, de métal (ou métalloïde), et/ou d'un composé métallique (ou métalloïdique) réductible par le carbone, ledit métal (ou métalloïde) étant carburable, et avec d'éventuels solvants, plastifiants et/ou d'autres adjuvants organiques ou non.
. on met en forme ledit mélange,
. on élimine au moins en partie les éventuels solvants, plastifiants et/ou adjuvants
. on réticule le composé organique, après l'avoir éventuellement copolymérisé
. on traite thermiquement dans un premier temps, entre 500 et 1000°C en atmosphère non oxydante pour carboniser le composé organique et obtenir un squelette poreux constitué essentiellement d'un mélange de carbone et de particules dudit métal (ou métalloïde) et/ou dudit composé métallique (métalloïdique), et dans un deuxième temps entre 1000 et 1400°C en atmosphère non oxydante, pour opérer une transformation en carbure, les profits thermiques étant tels que les réactions aient lieu en phase solide et/ou gazeuse.

2. Procédé selon revendication 1, caractérisé en ce que ledit squelette carboné, dans lequel sont dispersées les particules, est activé par tous procédés habituels connus et utilisés pour l'obtention des charbons actifs, par exemple oxydation ménagée.

3. Procédé selon l'une quelconque des revendications 1 et 2, caractérisé en ce que la poudre non fusible est du silicium tel quel ou partiellement oxydé.

4. Procédé selon l'une quelconque des revendications 1 et 2, caractérisé en ce que la poudre non fusible est l'un au moins des métaux de transition des groupes 3b, 4b, 5b, 6b, 7b, 8 des périodes 4, 5, 6 de la classification périodique des éléments, des terres rares (lanthanides), des actinides, et/ou de leurs oxydes réductibles par le carbone.

5. Procédé selon l'une quelconque des revendications 1 et 2, caractérisé en ce que la poudre non fusible est constituée de l'un au moins des métaux du groupe formé par le molybdène, le tungstène, le vanadium et le fer.

6. Procédé selon l'une quelconque des revendications 1 à 5, caractérisé en ce que la dimension des particules de la poudre est inférieure à 100 µm et a une surface spécifique BET d'au moins 0,5 m²/g.

7. Procédé selon l'une quelconque des revendications 1 à 6, caractérisé en ce que le composé organique polymérique réticulable est une résine ou un brai présentant un taux de carbone résiduel après carbonisation d'au moins 25%, que l'on réticule par tous moyens connus.

8. Procédé selon la revendication 7 caractérisé en ce que la résine est une résine furfurylique ou phénolique.

9. Procédé selon l'une quelconque des revendications 1 à 8, caractérisé en ce qu'on additionne au mélange un ou des adjuvants servant à modifier les caractéristiques de la pièce poreuse obtenue en fonction de l'usage prévu: agents porogènes, spécifiques, agents générateurs de surface spécifique, agents dopants, etc...

10. Procédé selon l'une quelconque des revendications 1 à 9, caractérisé en ce que la quantité de résine et éventuellement d'autres agents organiques est telle qu'après carbonisation, la quantité de carbone est au moins en léger excès par rapport à la stoechiométrie des réactions ayant lieu lors des différents traitements thermiques, en particulier réduction et carburation.

11. Procédé selon l'une quelconque des revendications 1 à 10, caractérisé en ce que la carbonisation est effectuée en atmosphère non oxydante entre 500 et 1000° C, et que ledit squelette poreux obtenu, constitué d'un mélange de carbone et de particules, est activé par un traitement d'oxydation ménagée de la phase carbonée.

12. Procédé selon l'une quelconque des revendications 1 à 11, caractérisé en ce que la carburation est effectuée sous atmosphère non oxydante entre 1000 et 1300° C et de préférence entre 1150 et 1250° C.

13. Procédé selon l'une quelconque des revendications 1 à 12, caractérisé en ce que le corps poreux solide obtenu constitué principalement de carbure réfractaire à surface spécifique élevée est activé par un traitement acide ou alcalin, en particulier par l'acide fluorhydrique pour donner un corps poreux ayant une surface montrant une réaction acide dans le cas de carbure de Si.

14. Corps solide poreux constitué essentiellement de carbure réfractaire métallique (ou métalloïdique) obtenu selon le procédé de l'une quelconque des revendications 1 à 13 caractérisé en ce que, après élimination du carbone résiduel, il a une surface spécifique BET d'au moins 15 m²/g, couramment d'au moins 30 m²/g, une porosité ouverte bimodale et d'excellentes caractéristiques mécaniques.

15. Corps solide poreux selon la revendication 14, caractérisé en ce qu'il comporte en surface des espèces métastables amorphes, par exemple du type Si Ox Cy ou d'oxycarbonitrure, favorisant l'activation de la surface poreuse de ladite pièce.

16. Corps solide poreux selon l'une quelconque des revendications 14 et 15, caractérisé en ce qu'il comporte des agents dopants.

17. Corps solide poreux selon l'une quelconque des revendications 14 à 16, caractérisé en ce que ladite porosité bimodale comprend une famille de pores compris entre 1 et 100 µm environ (mésoporosité) et une famille de pores inférieure à 0,1 µm (nanoporosité).

18. Utilisation des carbures poreux préparés selon ou conformes à l'une quelconque des revendications 1 à 17 comme support de catalyseur ou comme catalyseur de réaction chimique ou pétrochimique à haute température ou de réaction de conversion de gaz d'échappement de véhicules automobiles.

## Claims

1. A process for obtaining porous solid bodies of a shape and porosity adapted to requirements, and which are constituted mainly by refractory carbides of metallic and/or metalloid elements, with a large specific surface area, characterised in that:
. at least one exclusively organic, polymeric and/or copolymerisable compound which can be carbonised and which is capable of producing a carbonaceous solid skeleton is mixed closely with a non-fusible powder, under treatment conditions, of metal (or metalloid) and/or a metallic (or metalloidal) compound which can be reduced by carbon, said metal (or metalloid) being able to be carburised, and with possible solvents, plasticisers and/or other organic or non-organic additives.
. said mixture is shaped,
. any solvents, plasticisers and/or additives are removed at least in part
. the organic compound is cross-linked, possibly after having been copolymerised
. heat treatment is applied during a first stage, between 500 and 1000°C, in a non-oxidising atmosphere, in order to carbonise the organic compound and obtain a porous skeleton constituted mainly of a mixture of carbon and of particles of said metal (or metalloid) and/or of said metallic (metalloidal) compound, and during a second stage at between 1000 and 1400°C in a non-oxidising atmosphere, in order to carry out conversion to carbide, the heat profiles being such that the reactions take place in solid and/or gaseous phase.

2. A process according to Claim 1, characterised in that said carbonaceous skeleton in which the particles are dispersed is activated by any conventional process known and used in order to obtain active carbons, e.g. controlled oxidation.

3. A process according to Claim 1 or Claim 2, characterised in that the non-fusible powder is silicon, as such, or partially oxidised.

4. A process according to Claim 1 or Claim 2, characterised in that the non-fusible powder is at least one of the transition metals of groups 3b, 4b, 5b, 6b, 7b, 8 of periods 4, 5, 6 of the Periodic Classification of Elements, rare earths (lanthanides), actinides, and/or the oxides thereof which can be reduced by carbon.

5. A process according to Claim 1 or Claim 2, characterised in that the non-fusible powder is constituted by at least one of the metals of the group formed by molybdenum, tungsten, vanadium and iron.

6. A process according to any one of Claims 1 to 5, characterised in that the particle size of the powder is less than 100 µm and has a BET specific surface area of at least 0.5 m²/g.

7. A process according to any one of Claims 1 to 6, characterised in that the polymeric organic compound which can be cross-linked is a resin or a pitch with a residual carbon content after carbonisation of at least 25%, which is cross-linked using any known means.

8. A process according to Claim 7, characterised in that the resin is a furfuryl resin or a phenolic resin.

9. A process according to any one of Claims 1 to 8, characterised in that one or more additives is/are added to the mixture in order to modify the properties of the porous piece obtained as a function of the intended use: expanding agents, specific agents, agents for generating a specific surface, doping agents, etc. . .

10. A process according to any one of Claims 1 to 9, characterised in that the amount of resin, and possibly other organic agents, is such that after carbonisation the amount of carbon is at least slightly in excess of the stoichiometry of the reactions which take place during the various heat treatments, in particular reduction and carburisation.

11. A process according to any one of Claims 1 to 10, characterised in that carbonisation is carried out in a non-oxidising atmosphere at between 500 and 1000°C, and that said porous skeleton obtained which is constituted by a mixture of carbon and of particles is activated by a controlled oxidation treatment of the carbonaceous phase.

12. A process according to any one of Claims 1 to 11, characterised in that the carburisation operation is carried out in a non-oxidising atmosphere at between 1000 and 1300°C, and preferably at between 1150 and 1250°C.

13. A process according to any one of Claims 1 to 12, characterised in that the porous solid body obtained and constituted mainly by refractory carbide with a high specific surface area is activated by an acid or alkaline treatment, in particular by hydrofluoric acid, in order to give a porous body with a surface which shows an acid reaction in the case of Si carbide.

14. A porous solid body constituted mainly by metallic (or metalloidal) refractory carbide, obtained in accordance with the process of any one of Claims 1 to 13, characterised in that after the elimination of the residual carbon, it has a BET specific surface area of at least 15 m²/g, usually at least 30 m²/g, a bimodal open porosity and excellent mechanical properties.

15. A porous solid body according to Claim 14, characterised in that it comprises, at the surface, amorphous metastable species, e.g. of the Si Ox Cy or oxycarbonitride type, which promote activation of the porous surface of said piece.

16. A porous solid body according to either Claim 14 or Claim 15, characterised in that it comprises doping agents.

17. A porous solid body according to any one of Claims 14 to 16, characterised in that said bimodal porosity comprises a family of pores of between 1 and 100 µm approximately (mesoporosity) and a family of pores less than 0.1 µm (nanoporosity).

18. Use of porous carbides prepared in accordance with, or in conformity with, any one of Claims 1 to 17 as a catalyst carrier or as a catalyst for high temperature chemical or petrochemical reactions or a catalyst for motor vehicle exhaust fume conversion reactions.

## Patentansprüche

1. Verfahren zur Herstellung von porösen Festkörpern von anforderungsgemäßer Form und Porosität mit erhöhter spezifischer Oberfläche, die hauptsächlich aus feuerfesten Carbiden metallischer und/ oder metalloider Elemente bestehen,
gekennzeichnet durch folgende Schritte:
. Intensives Vermischen mindestens einer ausschließlich organischen, polymeren und/oder copolymerisierbaren, verkokbaren und zur Bildung eines festen Kohlenstoffgerüsts fähigen Verbindung mit einem unter den Behandlungsbedingungen nicht schmelzbaren Pulver aus einem Metall (oder Metalloid) und/oder einer durch Kohlenstoff reduzierbaren Metall- (oder Metalloid-)Verbindung, wobei das Metall (oder Metalloid) Carbide bilden kann, und ggf. mit Lösungsmitteln, Weichmachern und/oder anderen ggf. organischen Zusatzstoffen;
. Formen des Gemisches;
. Entfernen mindestens eines Teils der ggf. vorhandenen Lösungsmittel, Weichmacher und/oder Zusatzstoffe;
. Vernetzung der organischen Verbindung, nachdem sie ggf. copolymerisiert wurde;
. erste thermische Behandlung bei einer Temperatur von 500 bis 1000 °C in nichtoxidierender Atmosphäre, um die organische Verbindung zu carbonisieren und ein poröses Gerüst zu erhalten, das im wesentlichen aus einem Gemisch aus Kohlenstoff und den Metall- (oder Metalloid-)Teilchen und/oder der Metall-(Metalloid-)Verbindung besteht, und eine zweite thermische Behandlung bei einer Temperatur von 1000 bis 1400 °C in nichtoxidierender Atmosphäre, um eine Umwandlung in Carbid zu bewirken, wobei die thermischen Profile so sind, daß die Reaktionen in fester Phase und/oder Gasphase stattfinden.

2. Verfahren nach Anspruch 1, dadurch gekennzeichnet, daß das Kohlenstoffgerüst, in dem die Teilchen dispergiert sind, durch alle herkömmlichen bekannten und zur Herstellung von Aktivkohlen verwendeten Verfahren, beispielsweise durch schonende Oxidation, aktiviert wird.

3. Verfahren nach Anspruch 1 oder 2, dadurch gekennzeichnet, daß das nichtschmelzbare Pulver aus Silicium, unverändert oder teilweise oxidiert, besteht.

4. Verfahren nach Anspruch 1 oder 2, dadurch gekennzeichnet, daß das nichtschmelzbare Pulver mindestens eines von Übergangsmetallen der Gruppen 3b, 4b, 5b, 6b, 7b, 8 der Perioden 4, 5, 6 des Periodensystems, Seltenerdmetallen (Lanthanoiden), Actinoiden und/oder ihren durch Kohlenstoff reduzierbaren Oxiden ist.

5. Verfahren nach Anspruch 1 oder 2, dadurch gekennzeichnet, daß das nichtschmelzbare Pulver aus mindestens einem Metall der Gruppe Molybdän, Wolfram, Vanadium und Eisen besteht.

6. Verfahren nach einem der Ansprüche 1 bis 5, dadurch gekennzeichnet, daß die Größe der Teilchen im Pulver kleiner als 100 µm ist und die spezifische Oberfläche BET mindestens 0,5 m²/g beträgt.

7. Verfahren nach einem der Ansprüche 1 bis 6, dadurch gekennzeichnet, daß die organische vernetzbare Polymerverbindung ein Harz oder Pech mit einem Restkohlenstoffgehalt nach der Carbonisierung von mindestens 25 % ist, das man durch alle bekannten Mittel vernetzt.

8. Verfahren nach Anspruch 7, dadurch gekennzeichnet, daß das Harz ein Furfurylharz oder Phenolharz ist.

9. Verfahren nach einem der Ansprüche 1 bis 8, dadurch gekennzeichnet, daß dem Gemisch ein oder mehrere Zusatzstoffe zugesetzt werden, um die Eigenschaften des erhaltenen porösen Körpers in Abhängigkeit von der gewünschten Verwendung zu modifizieren: Treibmittel, spezifische Mittel, Mittel zur Bildung der spezifischen Oberfläche, Dotierstoffe und dgl.

10. Verfahren nach einem der Ansprüche 1 bis 9, dadurch gekennzeichnet, daß der Anteil an Harz und der ggf. vorhandenen weiteren organischen Substanzen so ist, daß der Kohlenstoff nach der Carbonisierung in mindestens einem leichten Überschuß, bezogen auf die Stöchiometrie der Reaktionen, vorliegt, die im Laufe der verschiedenen thermischen Behandlungen, insbesondere der Reduktion und Carburierung, stattfinden.

11. Verfahren nach einem der Ansprüche 1 bis 10, dadurch gekennzeichnet, daß die Carbonisierung in einer nichtoxidierenden Atmosphäre bei 500 bis 1000 °C durchgeführt wird, und daß das erhaltene poröse Gerüst, das aus einem Gemisch aus Kohlenstoff und Teilchen besteht, durch eine Behandlung einer schonenden Oxidation der Kohlenstoffphase aktiviert wird.

12. Verfahren nach einem der Ansprüche 1 bis 11, dadurch gekennzeichnet, daß die Carburierung in nichtoxidierender Atmosphäre von 1000 bis 1300 °C und vorzugsweise von 1150 bis 1250 °C durchgeführt wird.

13. Verfahren nach einem der Ansprüche 1 bis 12, dadurch gekennzeichnet, daß der erhaltene poröse Festkörper, der im wesentlichen aus feuerfestem Carbid mit erhöhter spezifischer Oberfläche besteht, durch eine saure oder alkalische Behandlung, insbesondere durch Fluorwasserstoffsäure aktiviert wird, damit ein poröser Körper mit einer Oberfläche erhalten wird, die im Fall von Siliciumcarbid eine saure Reaktion zeigt.

14. Poröser Festkörper, der im wesentlichen aus feuerfestem Metall (oder Metalloid-)Carbiden besteht und nach dem Verfahren nach einem der vorhergehenden Ansprüche 1 bis 13 hergestellt wurde, dadurch gekennzeichnet, daß er nach Entfernen des Restkohlenstoffs eine spezifische Oberfläche BET von mindestens 15 m²/g, häufig mindestens 30 m²/g, eine offene Porosität mit zwei verschiedenen Porenarten und hervorragende mechanische Eigenschaften aufweist.

15. Poröser Festkörper nach Anspruch 14, dadurch gekennzeichnet, daß er an der Oberfläche amorphe metastabile Stoffe aufweist, beispielsweise vom Typ SiOₓC_{y} oder Oxicarbonitrid, welche die Aktivierung der porösen Oberfläche des Körpers begünstigen.

16. Poröser Festkörper nach Anspruch 14 oder 15, dadurch gekennzeichnet, daß er Dotierstoffe enthält.

17. Poröser Feststoff nach einem der Ansprüche 14 bis 16, dadurch gekennzeichnet, daß die Porosität mit zwei verschiedenen Porenarten eine Gruppe von Poren im Bereich von etwa 1 bis 100 µm (Mesoporosität) und eine Gruppe von Poren unter als 0,1 µm (Nanoporosität) umfaßt.

18. Verwendung der nach oder entsprechend einem der Ansprüche 1 bis 17 hergestellten porösen Carbide als Katalysatorträger oder als Katalysator für chemische oder petrochemische Reaktionen bei hoher Temperatur oder für Umwandlungsreaktionen von Kraftfahrzeugabgasen.
